# FASCICULE DE BREVET EUROPEEN

(11) **EP 2 202 767 B1**
(45) Date de publication et mention de la délivrance du brevet: **08.06.2011**
(21) Numéro de dépôt: 09179588.0
(22) Date de dépôt: 17.12.2009
(51) Int. Cl.: H01H 1/00

(54) **Dispositif de surveillance de la température d'un élément**
Vorrichtung zur Überwachung der Temperatur eines Elementes
Device for controlling the temperature of an element

(30) Priorité: 24.12.2008 FR 0859055
(43) Date de publication de la demande: 30.06.2010
(73) Titulaire: STMicroelectronics (Rousset) SAS, 13790 Rousset (FR)
(72) Inventeur: Fornara, Pascal, 83910 Pourrieres (FR); Rivero, Christian, 13080 Luynes (FR)
(74) Mandataire: de Beaumont, Michel

(56) Documents cités:
- EP-A- 1 777 721
- WO-A-2004/061887
- US-A- 5 917 226
- US-A1- 2004 201 313
- US-A1- 2007 273 463

## Description

### Domaine de l'invention

La présente invention concerne un dispositif et un procédé de surveillance de la température d'un élément. Plus particulièrement, la présente invention concerne un dispositif et un procédé permettant de vérifier que la température de l'élément n'a pas excédé un seuil.

### Exposé de l'art antérieur

Diverses techniques de surveillance de la température d'un produit sont connues. Une première technique consiste à placer, sur un produit, un circuit électronique qui enregistre, périodiquement, dans une mémoire, la température du produit. Un appareil de lecture approprié permet ensuite d'extraire les valeurs stockées. On peut ainsi vérifier que le produit n'a pas subi de surchauffe. Une telle technique nécessite que le circuit soit alimenté en permanence.

Le document US 2007/0273463 A1 décrit un circuit selon le préambule de la revendication 1.

Une seconde technique consiste à placer, sur un produit devant rester au frais, une pastille de couleur dont la couleur change, de façon irréversible, lorsque la température du produit a dépassé un seuil. Ces pastilles sont généralement constituées de microorganismes sensibles à la température. Ainsi, les consommateurs sont avertis de la fraîcheur du produit. Cette solution n'est pas réversible et ne fonctionne que pour des températures inférieures à 10°C.

Il serait souhaitable de disposer d'un dispositif et d'un procédé de surveillance de la température d'un élément qui soit réutilisable, dont la conception peut être adaptée en fonction du seuil de température que l'on souhaite détecter et qui ne nécessite pas d'alimentation en continu.

### Résumé

Un objet d'un mode de réalisation de la présente invention est de prévoir un dispositif et un procédé de surveillance de la température d'un élément ne nécessitant pas d'alimentation en continu.

Un autre objet d'un mode de réalisation de la présente invention est de prévoir un dispositif réutilisable.

Un autre objet d'un mode de réalisation de la présente invention est de prévoir un dispositif dont la fabrication fait intervenir des étapes classiques de formation de composants électroniques.

Ainsi, un mode de réalisation de la présente invention prévoit un circuit de surveillance de la température environnant ce circuit, comprenant un élément de stockage de charges, un élément d'évacuation de charges et un interrupteur thermomécanique connectant l'élément de stockage à l'élément d'évacuation, l'interrupteur étant adapté à se fermer, sans que le circuit soit alimenté électriquement, lorsque la température excède un seuil.

Selon un mode de réalisation de la présente invention, le circuit comprend en outre un dispositif de lecture de la quantité de charges dans l'élément de stockage.

Selon un mode de réalisation de la présente invention, l'interrupteur thermomécanique est constitué de deux bandes métalliques dont des extrémités en regard sont séparées d'une distance adaptée à se réduire lorsque la température augmente et à s'annuler lorsque la température excède le seuil.

Selon un mode de réalisation de la présente invention, le circuit comprend un empilement d'interconnexion dans lequel sont formées les bandes métalliques, les extrémités des bandes étant séparées par une région remplie d'air formée dans l'empilement d'interconnexion.

Selon un mode de réalisation de la présente invention, les bandes métalliques sont en cuivre ou en aluminium.

Selon un mode de réalisation de la présente invention, l'élément de stockage est constitué d'un transistor MOS double grille comprenant une grille de commande et une grille flottante, la grille flottante étant connectée à l'interrupteur thermomécanique.

Selon un mode de réalisation de la présente invention, l'élément d'évacuation de charges est constitué d'un contact entre l'interrupteur thermomécanique et le substrat dans et sur lequel est formé le circuit.

Un autre mode de réalisation de la présente invention prévoit un procédé de surveillance de la température d'un élément comprenant les étapes suivantes : alimenter un circuit attaché à l'élément pour injecter des charges dans un élément de stockage de charges de ce circuit ; supprimer l'alimentation ; provoquer une évacuation des charges si la température excède un seuil de température ; alimenter le circuit ; et lire la quantité de charges présentes dans l'élément de stockage.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1 est un schéma-blocs d'un dispositif selon un mode de réalisation de la présente invention ;
la figure 2 est un schéma électrique d'une cellule mémoire classique constitutive des mémoires EEPROM ;
la figure 3 est une vue en coupe de la cellule de la figure 2 ;
la figure 4 représente un élément de stockage de charges pouvant être utilisé dans un circuit selon un mode de réalisation de la présente invention ;
la figure 5 représente un interrupteur thermomécanique et un élément d'évacuation de charges pouvant être utilisés dans un circuit selon un mode de réalisation de la présente invention ;
la figure 6 représente deux courbes de l'allongement de métaux en fonction de la température ; et
la figure 7 est un schéma électrique d'un circuit selon un mode de réalisation de la présente invention comprenant un dispositif de lecture.

Par souci de clarté, de mêmes éléments ont été désignés par de mêmes références aux différentes figures et, de plus, comme cela est habituel dans la représentation des circuits intégrés, les diverses figures ne sont pas tracées à l'échelle.

### Description détaillée

Les inventeurs prévoient un circuit et un procédé de surveillance de la température environnant le circuit qui ne nécessite pas d'alimentation en continu lors de la surveillance. Un tel circuit peut, par exemple, être utilisé pour surveiller que la température d'un produit, lors d'une phase de transport, ne dépasse pas un seuil au-dessus duquel le produit s'altère. Il peut également être utilisé pour détecter la réalisation d'opérations d'ingénierie inverse (reverse engineering) sur un produit. En effet, ces opérations prévoient généralement des étapes de chauffages à des températures importantes que l'on peut ainsi détecter. On peut également souhaiter connaître l'historique de la température d'un produit dans le cas d'un retour du produit par un client pour vérifier que le produit a été utilisé par le client dans des conditions de température normales.

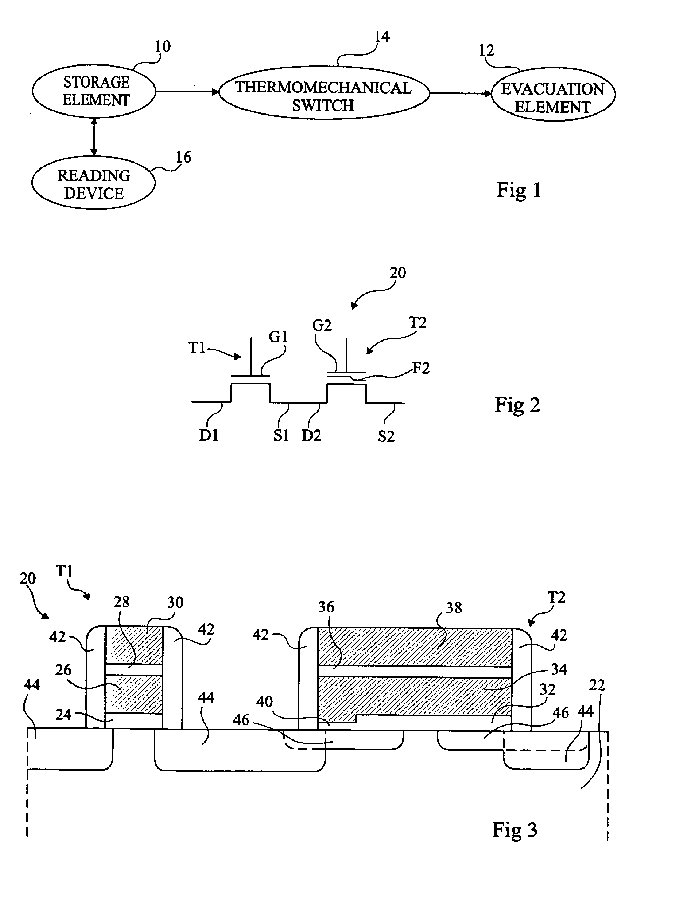

La figure 1 est un schéma-blocs d'un mode de réalisation d'un dispositif de surveillance de la température d'un produit.

Le dispositif comprend un élément de stockage de charges électriques 10 (STORAGE ELEMENT) et un élément permettant l'évacuation de charges 12 (EVACUATION ELEMENT). L'élément de stockage 10 et l'élément d'évacuation 12 sont connectés par l'intermédiaire d'un interrupteur thermomécanique 14 (THERMOMECHANICAL SWITCH) qui est prévu pour se fermer lorsque la température dépasse un seuil de température choisi. L'élément de stockage 10 est associé à un dispositif de lecture 16 (READING DEVICE) permettant de déterminer la quantité de charges présentes dans l'élément de stockage de charges 10.

Initialement, l'interrupteur thermomécanique 14 est ouvert. On alimente le dispositif pour stocker des charges dans l'élément de stockage de charges 10. L'alimentation est ensuite coupée. Si la température dépasse le seuil de l'interrupteur thermomécanique 14, celui-ci se ferme et les charges stockées dans l'élément 10 s'évacuent par l'élément 12. Tant que la température reste inférieure au seuil, l'interrupteur thermomécanique 14 reste ouvert et les charges restent stockées dans l'élément 10.

La quantité de charges présentes dans l'élément 10 est ainsi représentative du fait que le produit a été placé dans un environnement surchauffé, par rapport à un seuil, depuis une dernière étape d'initialisation dans laquelle des charges ont été introduites. Le dispositif de lecture 16 est alimenté quand on souhaite déterminer cette quantité de charges après la phase de surveillance.

La figure 2 est un schéma électrique d'une cellule mémoire 20 classique constitutive des mémoires EEPROM.

La cellule mémoire 20 comprend un transistor de sélection T1 et un transistor de stockage ou point mémoire T2. Le transistor T1 est un transistor MOS comportant un drain D1, une source S1 et une grille isolée G1. Le point mémoire T2 est de type à double grille. Il comporte un drain D2, une source S2, et deux grilles isolées, à savoir une grille flottante F2 et une grille de commande G2. On considère ici un point mémoire T2 dont l'isolant de grille flottante F2 comporte au moins une partie suffisamment mince pour permettre un passage, par effet tunnel, de porteurs entre le canal sous-jacent et la grille flottante. L'isolant de la grille flottante est appelé "isolant tunnel" ou "oxyde tunnel". La source S1 du transistor T1 est reliée au drain D2 du point mémoire T2.

La figure 3 est une vue en coupe de la cellule mémoire 20 de la figure 2.

La cellule mémoire 20 est formée dans une région active d'un substrat semiconducteur 22, typiquement en silicium, délimitée latéralement par des zones d'isolement de champ (non représentées). Au-dessus du substrat semiconducteur 22 sont formées les structures de grille du transistor T1 et du point mémoire T2. La grille du transistor T1 est composée d'un empilement d'une première portion isolante 24, d'une première portion conductrice 26, d'une seconde portion isolante 28 et d'une seconde portion conductrice 30. Il peut être souhaitable que le fonctionnement du transistor de sélection T1 soit similaire à celui d'un transistor MOS classique à grille unique. Pour ce faire, les portions conductrices 26 et 30 sont court-circuitées par des pistes et des vias métalliques non représentés.

La grille du point mémoire T2 est constituée d'un empilement d'une première portion isolante 32, d'une première portion conductrice 34, d'une seconde portion isolante 36 et d'une seconde portion conductrice 38. La portion conductrice 34 forme la grille flottante F2 du point mémoire T2. La portion isolante 32 comporte une partie relativement épaisse formant la partie non tunnel de l'isolant de la grille flottante F2 et une partie relativement mince 40 constituant la zone d'oxyde tunnel. Des espaceurs 42 sont formés de part et d'autre du transistor de sélection T1 et du point mémoire T2.

De part et d'autre du transistor de sélection T1 et du point mémoire T2, dans le substrat 22, sont formées des zones d'implantation 44 de drain et de source de ces éléments. Deux autres zones d'implantation 46 sont formées en surface du substrat 22, et s'étendent en partie en dessous de la portion isolante 32 du point mémoire.

En fonction des tensions appliquées entre le drain D2 et la source S2 et sur la grille de commande G2 du point mémoire, on peut injecter des électrons dans la grille flottante F2/34 pour mettre le point mémoire dans un état dit "programmé". Il est ensuite possible d'évacuer les charges stockées dans la grille flottante en appliquant des tensions adaptées sur la grille, le drain et la source du point mémoire T2.

Les inventeurs prévoient d'utiliser les propriétés de rétention de charges d'une cellule mémoire EEPROM modifiée pour former l'élément de stockage de charges 10 de la figure 1.

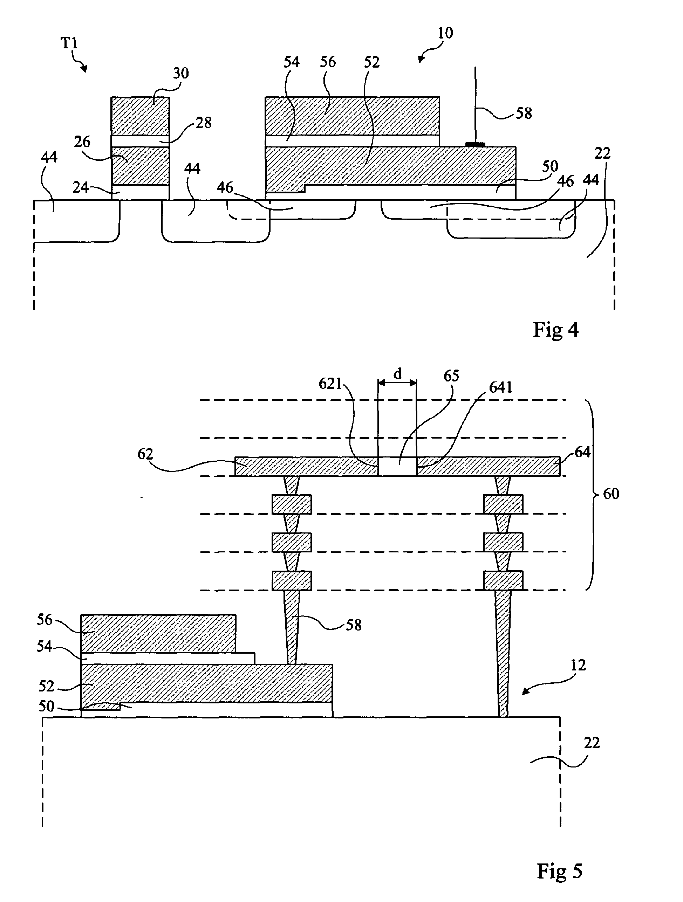

La figure 4 représente une telle cellule 10 modifiée. La cellule 10 comprend un transistor de sélection T1 identique à celui de la figure 3, formé sur un substrat 22 dont les régions dopées (44 et 46) sont identiques aux régions de la figure 3. La cellule 10 comprend également un point mémoire dont la grille est constituée d'un empilement d'une première couche isolante 50, d'une première couche conductrice 52, d'une seconde couche isolante 54 et d'une seconde couche conductrice 56. La première couche isolante 50 comprend une région plus mince pour permettre le passage de porteurs par effet tunnel.

La première couche isolante 50 et la première couche conductrice 52 s'étendent, en surface du substrat 22, sur une surface plus importante que la seconde couche isolante 54 et la seconde couche conductrice 56. Un contact 58 est pris sur le dessus de la première couche conductrice 52 et est destiné à être connecté à l'interrupteur thermomécanique 14. Ainsi, on peut, à l'aide du transistor de sélection T1, injecter des charges dans la grille flottante 52 du point mémoire 10 dont la grille est connectée à un interrupteur thermomécanique 14 initialement ouvert.

La figure 5 représente un exemple d'un interrupteur thermomécanique pouvant être utilisé dans un dispositif tel que celui de la figure 1.

En figure 5 est représenté le point mémoire 10 dont la grille flottante 52 s'étend sur le substrat 22 sur une distance plus importante que la grille de commande 56. Le contact 58 est connecté, par l'intermédiaire de plusieurs niveaux d'interconnexion 60 que comporte habituellement un circuit intégré, à une première bande métallique 62 formée dans un niveau d'interconnexion supérieur. La première bande métallique 62 constitue une première partie de l'interrupteur thermomécanique 14. Une seconde bande métallique 64, dans le même niveau d'interconnexion que la bande 62, constitue la seconde partie de l'interrupteur 14. A titre d'exemple, les première et seconde bandes métalliques 62 et 64 peuvent être en cuivre ou en aluminium. Les première et seconde bandes métalliques 62 et 64 sont séparées par une cavité 65 remplie d'air dont la longueur d est choisie en fonction du seuil souhaité. Lors d'un échauffement, la dilatation du métal constitutif des bandes 62 et 64 provoque une réduction de la distance d. Quand l'échauffement est suffisant, les extrémités libres 621 et 641 des bandes entrent en contact, ce qui fonctionnellement ferme l'interrupteur.

La seconde bande métallique 64 est connectée, par l'intermédiaire de portions métalliques formées dans les niveaux d'interconnexion 60, au substrat 22. Cette connexion forme l'élément d'évacuation de charges 12 de la figure 1. On notera que le substrat 22 pourra être prévu de différentes façons pour former une résistance par laquelle les charges stockées dans la grille flottante 52 s'évacuent lorsque l'interrupteur thermomécanique 14 est fermé. Avantageusement, on notera que toutes les étapes nécessaires à la formation des éléments décrits ici peuvent être réalisées par des techniques de formation de composants électroniques classiques.

L'allongement de bandes en cuivre ou en aluminium en fonction de la température est égal à α.ΔT.l₀, ΔT étant la différence de température par rapport à une température de référence, la étant la taille de la bande métallique à la température de référence et α étant le coefficient d'allongement du métal. Le coefficient α est de l'ordre de 2,36.10⁻⁵ pour l'aluminium et de l'ordre de 1,70.10⁻⁵ pour le cuivre.

La structure de l'interrupteur de la figure 5 peut être formée par diverses techniques connues. Par exemple, si le niveau de métallisation comprenant les bandes 62 et 64 correspond au dernier niveau de métallisation de l'empilement d'interconnexion 60, les bandes métalliques 62 et 64 sont formées sur une couche isolante inférieure. Avantageusement, l'écart d requis dans la plupart des applications est suffisamment faible pour qu'une couche de passivation formée sur les bandes métalliques ne pénètre pas dans l'espace confiné entre les bandes, ce qui forme la cavité 65. Si le niveau de métallisation comprenant les bandes 62 et 64 n'est pas le dernier niveau de métallisation, la cavité 65 peut être formée en réalisant une gravure supplémentaire de l'isolant formé classiquement entre les bandes métalliques 62 et 64. On pourra prévoir de former une cavité 65, autour des extrémités des bandes 62 et 64, plus grande que celle présentée ici. On pourra également prévoir de ne former qu'une seule bande métallique 62 ou 64 et que la dilatation de cette bande permette un contact direct avec des vias métalliques d'un niveau d'interconnexion inférieur à une extrémité de la bande ou dans une partie centrale de celle-ci.

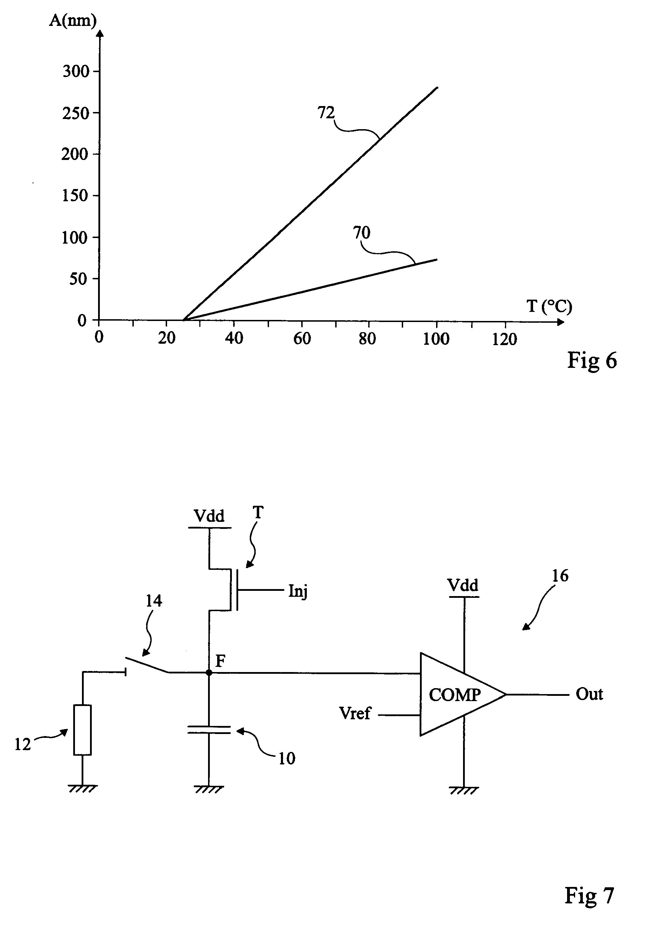

La figure 6 représente deux courbes 70 et 72 de l'allongement, respectivement, de bandes de cuivre et d'aluminium, en fonction de la température. La température de référence est fixée arbitrairement à 25°C et la longueur de la bande, à la température de référence, est égale à 160 µm pour la bande d'aluminium et à 60 µm pour la bande de cuivre.

A 85°C, on note que chaque bande 62 ou 64 présente un allongement de l'ordre de 230 nm si cette bande est en aluminium et de 60 nm si elle est en cuivre. Ainsi, pour surveiller le non dépassement d'une température de 85°C, la distance d sera prévue de l'ordre de 460 nm si les bandes sont en aluminium et d'environ 120 nm pour du cuivre. On notera que ces valeurs ne sont que des exemples.

La figure 7 est un schéma électrique d'un circuit selon un mode de réalisation de la présente invention et d'un exemple d'un dispositif de lecture 16 associé au circuit.

Le circuit comporte un transistor MOS d'injection de charges T dont la grille est connectée à un signal de commande d'injection Inj et dont les bornes principales sont connectées entre une tension positive d'alimentation Vdd et un noeud flottant F. Un élément de stockage de charges 10 (connexion au substrat), symbolisé en figure 7 par un condensateur, est connecté entre le noeud flottant F et la masse. Un élément d'évacuation des charges 12, symbolisé par une résistance, est connecté, par l'intermédiaire d'un interrupteur thermomécanique 14, au noeud flottant. La seconde borne de la résistance 12 est connectée à la masse.

Le dispositif de lecture 16 comprend un comparateur COMP dont une des bornes est connectée au noeud flottant F et dont l'autre borne est polarisée à une tension de référence Vref, par exemple égale à Vdd/2. Le comparateur COMP est alimenté. La sortie Out de l'amplificateur opérationnel est ainsi à un premier état si le noeud flottant contient des charges (interrupteur 14 toujours ouvert) et à un second état si l'interrupteur 14 a été fermé et que les charges du noeud flottant F ont été évacuées par la résistance 12.

Avantageusement, un circuit tel que le circuit de la figure 7 est facilement réutilisable. Après une lecture des charges stockées au niveau du noeud flottant, il est possible de réinjecter des charges dans l'élément de stockage de charges pour réaliser une nouvelle surveillance de la température.

Des modes de réalisation particuliers de la présente invention ont été décrits. Diverses variantes et modifications apparaîtront à l'homme de l'art. En particulier, on notera que le dispositif de lecture 16 pourra être différent du dispositif de lecture représenté en figure 7. De plus, on notera que les bandes métalliques formant l'interrupteur thermomécanique 14 pourront être en tout métal ou matériau conducteur se dilatant avec l'augmentation de la température. En outre, d'autres éléments de stockage qu'une cellule EEPROM peuvent être prévus pourvu de respecter les fonctionnalités décrites de stockage et d'évacuation de charges. Enfin, si l'air constitue un milieu préféré pour la région 65 entre les extrémités des bandes pour permettre la dilatation de celles-ci, d'autres milieux (par exemple du vide, un gaz ou un liquide) peuvent être utilisés pourvu d'être compatible avec la déformation souhaitée des bandes métalliques.

De plus, on notera que le circuit décrit ici pourra être intégré dans un dispositif électronique réalisant d'autres fonctions que la surveillance de la température, ce dispositif électronique pouvant être, quant à lui, alimenté pendant la surveillance de la température. On pourra également prévoir de placer plusieurs dispositifs de surveillance tel que celui présenté ici sur un même produit pour détecter la surchauffe de ce produit au dessus de différentes températures.

Le circuit décrit ici s'applique également à la surveillance de la température d'un circuit comprenant des composants électroniques intégrés. Dans ce cas, les éléments de stockage et d'évacuation de charges pourront être formés sur le même circuit intégré que celui comprenant les composants électroniques.

Avantageusement, le circuit de surveillance est réalisé en technologie CMOS. Si le circuit dont on souhaite surveiller la température est également en technologie CMOS, l'intégration du circuit de surveillance ne nécessite aucune étape de fabrication spécifique.

## Revendications

1. Circuit de surveillance de la température environnant ce circuit, comprenant :
un élément de stockage de charges (10) ;
un élément d'évacuation de charges (12) ;
un interrupteur thermomécanique (14) connectant l'élément de stockage (10) à l'élément d'évacuation (12), ledit interrupteur étant adapté à se fermer, sans que le circuit soit alimenté électriquement, lorsque la température excède un seuil ; **caractérisé en ce qu'** le circuit de surveillance comprend
un dispositif de lecture (16) de la quantité de charges dans l'élément de stockage (10).

2. Circuit selon la revendication 1, dans lequel l'interrupteur thermomécanique (14) est constitué de deux bandes métalliques (62, 64) dont des extrémités (621, 641) en regard sont séparées d'une distance (d) adaptée à se réduire lorsque la température augmente et à s'annuler lorsque la température excède ledit seuil.

3. Circuit selon la revendication 2, comprenant un empilement d'interconnexion (60) dans lequel sont formées les bandes métalliques (62, 64), les extrémités (621, 641) des bandes étant séparées par une région remplie d'air (65) formée dans l'empilement d'interconnexion.

4. Circuit selon la revendication 2 ou 3, dans lequel les bandes métalliques (62, 64) sont en cuivre ou en aluminium.

5. Circuit selon l'une quelconque des revendications 1 à 4, dans lequel l'élément de stockage (10) est constitué d'un transistor MOS double grille comprenant une grille de commande (56) et une grille flottante (52), la grille flottante étant connectée à l'interrupteur thermomécanique (14).

6. Circuit selon l'une quelconque des revendications 1 à 5, dans lequel l'élément d'évacuation de charges (12) est constitué d'un contact entre l'interrupteur thermomécanique et le substrat (22) dans et sur lequel est formé le circuit.

7. Circuit selon l'une quelconque des revendications 1 à 6, formé en technologie CMOS.

8. Circuit intégré comprenant des composants électroniques en technologie CMOS et un circuit selon l'une quelconque des revendications 1 à 6.

9. Procédé de surveillance de la température d'un élément, comprenant les étapes suivantes :
alimenter un circuit attaché à l'élément pour injecter des charges dans un élément de stockage de charges (10) de ce circuit ;
supprimer l'alimentation ;
provoquer une évacuation des charges si la température excède un seuil de température ;
alimenter le circuit ; et
lire la quantité de charges présentes dans l'élément de stockage.

## Claims

1. A circuit for monitoring the temperature surrounding this circuit, comprising:
a charge storage element (10);
a charge evacuation device (12);
a thermo-mechanical switch (14) connecting the storage element (10) to the evacuation element (12), said switch being capable of closing without for the circuit being electrically powered when the temperature exceeds a threshold;
**characterized in that** the monitoring circuit comprises a device (16) for reading the amount of charge in the storage element (10).

2. The circuit of claim 1, wherein the thermo-mechanical switch (14) is formed of two metal strips (62, 64) having opposite ends (621, 641) separated by a distance (d) adapted to decreasing as the temperature increases and to come down to zero when the temperature exceeds the threshold.

3. The circuit of claim 2, comprising an interconnect stack (60) in which the metal strips (62, 64) are formed, the ends (621, 641) of the strips being separated by a region filled with air (65) formed in the interconnect stack.

4. The circuit of claim 2 or 3, wherein the metal strips (62, 64) are made of copper or aluminum.

5. The circuit of any of claims 1 to 4, wherein the storage element (10) is formed of a dual-gate MOS transistor comprising a control gate (56) and a floating gate (52), the floating gate being connected to the thermo-mechanical switch (14).

6. The circuit of any of claims 1 to 5, wherein the charge evacuation element (12) is formed of a contact between the thermo-mechanical switch and the substrate (22) in and on which the circuit is formed.

7. The circuit of any of claims 1 to 6, formed using CMOS technology.

8. An integrated circuit comprising CMOS components implementing the circuit according to any of claims 1 to 6.

9. A method for monitoring the temperature of an element comprising the steps of:
powering a circuit attached to the element to inject charges into a charge storage element (10) of this circuit;
removing the power;
causing an evacuation of the charges if the temperature exceeds a temperature threshold;
powering the circuit; and
reading the amount of charge present in the storage element.

## Patentansprüche

1. Ein Schaltkreis zum Überwachen der den Schaltkreis umgebenden Temperatur, wobei der Schaltkreis folgendes aufweist:
ein Ladungsspeicherelement (10);
ein Ladungsableitelement (12);
ein thermomechanischer Schalter (14), der das Speicherelement (10) mit dem Ableitelement (12) verbindet, wobei der Schalter in der Lage ist, sich zu schließen, ohne dass der Schaltkreis elektrisch mit Leistung versorgt wird, wenn die Temperatur einen Schwellenwert übersteigt;
**dadurch gekennzeichnet, dass** der Bewachungsschaltkreis eine Vorrichtung (16) zum Lesen der Ladungsmenge in dem Speicherelement (10) aufweist.

2. Schaltkreis nach Anspruch 1, wobei der thermomechanische Schalter (14) aus zwei Metallstreifen (62, 64) gebildet ist, die zueinander weisende Enden (621, 641) besitzen, die über einen Abstand (d) voneinander beabstandet sind, wobei der Abstand (d) in der Lage ist, sich zu verringern, wenn die Temperatur ansteigt und der Null wird, wenn die Temperatur den Schwellenwert übersteigt.

3. Schaltkreis nach Anspruch 2, der einen mit Verbindungsstapel bzw. - stack (60) aufweist, auf dem die Metallstreifen (62, 64) ausgebildet sind, wobei die Enden (621, 641) der Streifen über einen mit Luft gefüllten Bereich (65) beabstandet sind, der oberhalb des Verbindungsstapels gebildet wird.

4. Schaltkreis nach Anspruch 2 oder 3, wobei die Metallstreifen (62, 64) aus Kupfer oder Aluminium hergestellt sind.

5. Schaltkreis nach einem der Ansprüche 1 bis 4, wobei das Speicherelement (10) aus einem Dual-Gate MOS Transistor aufgebaut ist, der ein Steuer- bzw. Control-Gate (56) und ein Floating-Gate (52) aufweist, wobei das Floating-Gate mit dem thermomechanischen Schalter (14) verbunden ist.

6. Schaltkreis nach einem der Ansprüche 1 bis 5, wobei das Planungsableitelement (12) aus einem Kontakt zwischen dem thermomechanischen Schalter und dem Substrat (22), in und auf dem der Schaltkreis ausgebildet ist, gebildet wird.

7. Schaltkreis nach einem der Ansprüche 1 bis 6, der unter Verwendung von CMOS-Technologie ausgebildet ist.

8. Ein CMOS-Komponenten aufweisender integrierter Schaltkreis, der den Schaltkreis gemäß einem der Ansprüche 1 bis 6 implementiert.

9. Ein Verfahren zum Überwachen der Temperatur eines Elements, das die folgenden Schritte aufweist:
mit Leistung versorgen eines Schaltkreises, der an dem Element befestigt ist, um Ladungen in ein Ladungsspeicherelement (10) dieses Schaltkreises einzugeben;
Entfernen der Leistung;
Bewirken einer Ableitung der Ladungen, wenn die Temperatur einen Temperaturschwellenwert übersteigt;
mit Energie versorgen des Schaltkreises; und
Lesen der Ladungsmenge, die in dem Speicherelement vorhanden ist.
